## Europäisches Patentamt

## European Patent Office

## Office européen des brevets

(19)

(11) Veröffentlichungsnummer: **0 028 291**
**B1**

(12) **EUROPÄISCHE PATENTSCHRIFT**

(45) Veröffentlichungstag der Patentschrift:
**16.05.84**

(51) Int. Cl.³: **D 01 G 23/06;** G 05 D 13/62

(21) Anmeldenummer: **80104659.0**

(22) Anmeldetag: **07.08.80**

(54) **Verfahren und Vorrichtung zur Produktionssteuerung einer Karde.**

(30) Priorität: **03.11.79 DE 2944428**

(43) Veröffentlichungstag der Anmeldung:
**13.05.81 Patentblatt 81/19**

(45) Bekanntmachung des Hinweises auf die Patenterteilung:
**16.05.84 Patentblatt 84/20**

(84) Benannte Vertragsstaaten:
**CH FR GB IT LI**

(56) Entgegenhaltungen:
**CH - A - 466 105**
**CH - A - 472 257**
**CH - A - 522 051**
**US - A - 3 539 085**

(73) Patentinhaber: **Trützschler GmbH & Co. KG,**
**Duvenstrasse 82-92, D-4050 Mönchengladbach 3 (DE)**

(72) Erfinder: **Hösel, Fritz, In der Aue 6,**
**D-4050 Mönchengladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Verfahren und Vorrichtung zur Produktionssteuerung einer Karde

Die Erfindung betrifft ein Verfahren und eine Vorrichtung zur Produktionssteuerung und Bandregulierung einer Karde, bei dem mindestens ein Regelkreis vorgesehen ist, mit je einem Meßwertaufnehmer für die Aufnahme von Ist-Werten in jedem Augenblick während des Verarbeitungsvorgangs, mit je einem Regler mit Sollwertsteller, in dem Soll-Werte für die Drehzahlen der Kardierwalzen eingegeben werden, wobei während des Verarbeitungsvorganges die Soll-Werte mit den Ist-Werten verglichen werden und mit je einem Stellglied, dem bei einer Abweichung der Ist-Werte von den Soll-Werten die erforderlichen Sollwertsignale zugeführt werden.

Bei einem bekannten Verfahren wird z. B. die Grundgeschwindigkeit der Speisewalze der Karde bei der ersten Produktion einer bestimmten Partie bestimmt. Um Materialschwankungen ausgleichen zu können, sind Korrekturmöglichkeiten dieser Geschwindigkeit vorhanden. Bei einer Änderung der Partienart müssen Antriebszahnräder für die Einzugswalze ausgewechselt werden, um deren Grundgeschwindigkeit zu verändern. Die spezifische Art der Partien beeinflußt z. B. die mögliche Liefergeschwindigkeit und den Verzug, die u. a. von der Geschwindigkeit der Einzugswalze abhängen. Dieses Verfahren hat also den Nachteil, daß bei Änderungen in der Zusammensetzung einer Partie die Produktion, der Verzug o. dgl. nur mit erheblichem Aufwand, u. a. an Zeit, gesteuert werden können.

Aus der CH-A-4 66 105 und der CH-A-5 22 051 ist ein Verfahren bekannt, bei dem mittels eines Meßorgans das Kardenband hinsichtlich seiner Dicke bestimmt wird und aus der gemessenen Größe ein Organ der Karde, z. B. die Speisewalze oder ein an die Karde angebautes Gerät gesteuert wird, das in der Lage ist, die Dickeschwankungen durch Drehzahländerungen auszugleichen. Mit diesem Verfahren ist es nicht möglich, eine Veränderung der Grundgeschwindigkeit der Karden bei wechselnden Fasernmaterialpartien zu verwirklichen.

Der Erfindung liegt demgegenüber die Aufgabe zugrunde, ein Verfahren zu schaffen, das die genannten Nachteile vermeidet, das insbesondere eine einfache und schnelle Anpassung der Produktionssteuerung, z. B. Liefergeschwindigkeit und Verzug, bei Änderung einer Partie gestattet.

Die Lösung dieser Aufgabe erfolgt durch die kennzeichnenden Merkmale des Patentanspruchs 1.

Erfindungsgemäß werden partiespezifische Daten, z. B. die Liefergeschwindigkeit und der Verzug, für eine bestimmte Partie ermittelt und dem Datenspeicher zugeführt. Danach sind diese Daten jederzeit abrufbar. Mit diesem Verfahren ist es also möglich, die partiespezifischen Daten aus dem Datenspeicher abzurufen und der Kardensteuerung zuzuführen, um z. B. die Liefergeschwindigkeit und den Verzug der Karde zu regeln. Dadurch entfallen die bei dem bekannten Verfahren notwendigen Einrichtungen fast ganz. Das erfindungsgemäße Verfahren gestattet eine einfache und schnelle Anpassung der Produktionssteuerung bei Änderung einer Partie.

Als partiespezifische Daten können weiterhin alle Betriebs- und Peripheriedaten gespeichert werden. So können z. B. neben dem für die Liefergeschwindigkeit verantwortlichen Schnellgang auch die Geschwindigkeit eines Anlegeganges und die Geschwindigkeit eines Langsamganges programmiert und gespeichert werden. Weiterhin können die Daten für die Bandlängen für die Kannenfüllung und für ein Vorsignal, bei dem automatisch der Materialtransport in den Langsamgang geschaltet wird, gespeichert werden.

Das Verfahren ist vorzugsweise anwendbar für Karden, deren Antriebsmotoren für die Speisewalze und den Abnehmer elektronisch drehzahlgeregelt sind. Zweckmäßig werden aus dem Datenspeicher ein elektronisches Signal (Soll-Wert) an einen Motorregler für den Abnehmer zur Einstellung der Liefergeschwindigkeit und ein elektrisches Signal (Soll-Wert) an einen Motorregler für die Speisewalze zur Einstellung des Verzuges abgegeben.

Vorzugsweise wird bei dem erfindungsgemäßen Verfahren, bei dem aus der Abweichung des Kardenbandes ein elektrisches Signal gewonnen wird, dem elektrischen Signal, das dem Motorregler für die Speisewalze zugeführt wird, das elektrische Signal aus der Kardenbandabweichung überlagert.

Die Erfindung umfaßt auch eine bevorzugte Vorrichtung zur Durchführung des erfindungsgemäßen Verfahrens. Bei dieser Vorrichtung sind die Sollwertsteller über eine Brücke mit dem Datenspeicher verbunden und sind die elektronischen Motorregler durch eine erste Stellung zweier umstellbarer Schalter mit dem Datenspeicher und durch eine zweite Stellung mit den Sollwertstellern verbunden.

Als Sollwertsteller werden zweckmäßig Potentiometer verwendet. Liefergeschwindigkeit und Verzug werden an zwei Potentiometern eingestellt. Die eingestellten Werte sind an einer Digitalanzeige direkt ablesbar. Da sie reproduzierbar sind, werden Partiewechsel erleichtert und beschleunigt. Wenn die Liefergeschwindigkeit verstellt wird, ändert sich der Verzug nicht. Um die Bandnummer zu ändern, braucht nur der Verzug an dem betreffenden Potentiometer entsprechend eingestellt zu werden. Da Zahnradwechsel weder für die Änderung der Liefergeschwindigkeit noch des Verzuges erforderlich sind, wird die Bedienung der Karde außerordentlich erleichtert, um so mehr, je größer die Zahl der Karden ist. Außerdem kann die optimale Liefergeschwindigkeit schnell und einfach angesteuert werden. Zum Beispiel können drei Liefergeschwindigkeiten unabhängig voneinander programmierbar sein. Sie dienen der Erhöhung der Leistung und des Wirkungsgrades der Karde. Die eingestellten Geschwindigkeiten werden aus dem Stillstand direkt automatisch angefahren. Wenn die Karde ganz abgestellt war, kann sie ohne neues Anlegen des Bandes anlaufen, da die Trommel synchron mit dem Materialtransport an- und ausläuft, sofern Band im Kannenstock ist.

Die Produktion wird durch die Drehzahl des Abnehmers bestimmt (m/min). Der Einzug verläuft in einem bestimmten Verhältnis zum Abnehmer synchron. Die Verstellung der Drehzahl erfolgt über ein Potentiometer. Die Geschwindigkeit (m/min) wird angezeigt (einschließlich aller Verzüge). Der für eine Partie optimale Wert wird nur einmal ermittelt, abgespeichert und ist auch nach mehrmaligem Partienwechsel jederzeit abrufbar.

Nach einer bevorzugten Ausführungsform, bei der die Abweichungen des Kardenbandes von einem Sollwert gemessen und daraus elektrische Signale gebildet werden, die zur Regelung der Einzugswalze herangezogen werden, ist zwischen dem Datenspeicher und dem elektronischen Motorregler für die Einzugswalze ein Korrekturelement angeordnet und wirken die Signale aus der Kardenbandabweichung auf das Korrekturelement ein.

Das Gewicht, d. h. die Nummer, eines Kardenbandes wird durch den Verzug zwischen Abnehmer und Einzug bestimmt. Die Einstellung erfolgt über ein Potentiometer und wird ggf. angezeigt. Der benötigte Wert wird einmalig ermittelt, abgespeichert und ist jederzeit wieder abrufbar. Während der Produktion findet ein Soll-Ist-Vergleich statt, dessen Ergebnis ein Maß für eine Verstellung der Einzugsgeschwindigkeit ist. Indirekt kommt dies bei konstanter Abnehmerdrehzahl einer Verzugsänderung gleich.

Vorzugsweise ist dem Sollwertsteller für den Abnehmer ein Anzeigegerät zugeordnet. Nach einer weiteren bevorzugten Ausführungsform ist dem Sollwertsteller für die Einzugswalze ein Anzeigegerät zugeordnet. Vorteilhaft ist dem Speicher ein Anzeigegerät zur Darstellung der eingestellten Werte, z. B. der Bandnummer, zugeordnet. Dieses Anzeigegerät kann z. B. digital anzeigen.

Die Erfindung ist nicht auf den Verzug zwischen dem Abnehmer und der Speisewalze beschränkt; sie umfaßt ebenso einen Verzug zwischen zwei anderen Walzen, z. B. zwischen der Abstreichwalze und dem Abnehmer, dem Abnehmer und der Trommel oder der Trommel und dem Vorreißer.

Die Erfindung wird nachfolgend anhand von zeichnerisch dargestellten Ausführungsbeispielen näher erläutert. Es zeigt

Fig. 1 ein Blockschaltbild einer erfindungsgemäßen Vorrichtung,

Fig. 2 ein Blockschaltbild der Vorrichtung mit einem einen Datenspeicher enthaltenden Steuergerät.

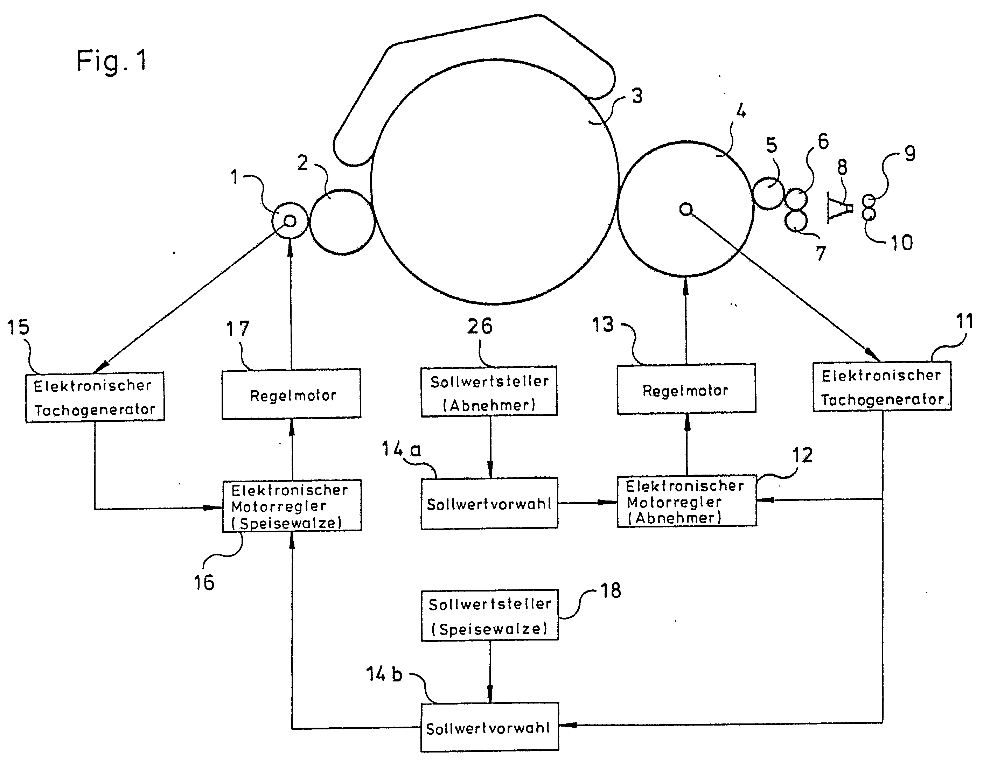

Fig. 1 zeigt schematisch eine Karde mit einer Einzugswalze 1, einem Vorreißer 2, einer Trommel 3, einem Abnehmer 4, einer Abstreichwalze 5, zwei Quetschwalzen 6, 7, einem Flortrichter 8 und zwei Abzugswalzen 9, 10. Dem Abnehmer 4 ist ein erster Motorregelkreis zugeordnet, der aus einem elektronischen Tachogenerator 11, einem elektronischen Motorregler 12 und einem den Abnehmer 4 antreibenden Regelmotor 13 besteht. Der elektronische Motorregler 12 besteht aus einem Drehzahlregler mit unterlagertem Stromregler. Der Lastteil ist als halbgesteuerte Einphasenbrücke ausgeführt. Ein Sollwertsteller 26 für den Abnehmer 4, z. B. ein Potentiometer, steht über eine Sollwertvorwahl 14a mit dem elektronischen Motorregler 12 in Verbindung. Der erste Motorregelkreis für den Abnehmer 4 steht über eine elektrische Welle mit einem zweiten Motorregelkreis für die Speisewalze 1 in Verbindung. Der zweite Motorregelkreis besteht aus einem der Speisewalze 1 zugeordneten elektronischen Tachogenerator 15, einem elektronischen Motorregler 16 und einem die Speisewalze 1 antreibenden Regelmotor 17. Ein Sollwertsteller 18 für die Speisewalze 1, z. B. ein Potentiometer steht über eine Sollwertvorwahl 14b mit dem elektronischen Motorregler 16 in Verbindung. Der elektronische Tachogenerator 11 und der elektronische Motorregler 12 stehen über die Sollwertvorwahl 14b mit dem elektronischen Motorregler 16 in Verbindung.

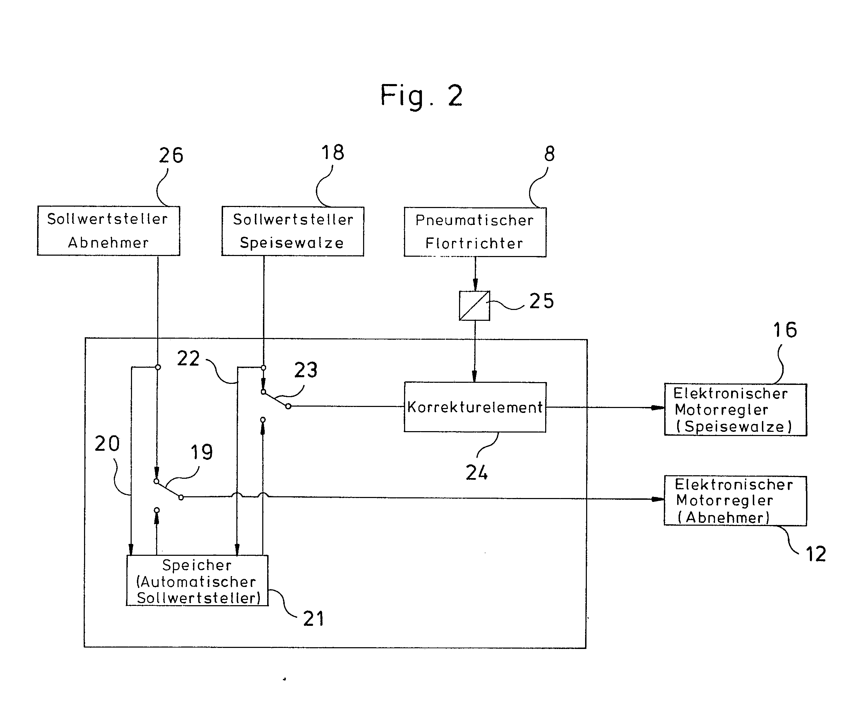

Nach Fig. 2 steht der Sollwertsteller 26 für den Abnehmer 4 über einen Schalter 19 mit dem elektronischen Motorregler 12 für den Abnehmer 4 in Verbindung. Fig. 2 zeigt den Schalter 19 in einer ersten Stellung. Der Sollwertsteller 13 ist gleichzeitig über eine Brücke 20 mit dem Datenspeicher 21 verbunden, um den Sollwert für den Abnehmer 4 einzuspeichern. Der Datenspeicher 21 kann über eine (nicht dargestellte) zweite Stellung des Schalters 19 mit dem elektronischen Motorregler 12 für den Abnehmer 4 in Verbindung stehen. In dieser Stellung wird der Sollwert mit Hilfe des Datenspeichers 21 automatisch eingestellt. Der Sollwertsteller 18 für die Speisewalze 1 steht über einen Schalter 23 mit dem elektronischen Motorregler 16 für die Speisewalze 1 in Verbindung. In Fig. 2 ist eine erste Stellung des Schalters 23 gezeigt. Der Sollwertsteller 18 steht außerdem über eine Brücke 22 mit dem Datenspeicher 21 in Verbindung, um den Sollwert für die Speisewalze 1 einzuspeichern. Der Datenspeicher 21 kann über eine (nicht dargestellte) zweite Stellung des Schalters 23 mit dem elektronischen Motorregler 16 für die Speisewalze 1 in Verbindung stehen. In dieser Stellung wird der Sollwert für die Speisewalze 1 automatisch eingestellt. Die Sollwertvorwahl 14a (siehe Fig. 1) umfaßt die Brücke 20, den Schalter 19 und den Datenspeicher 21; die Sollwertvorwahl 14b (siehe Fig. 1) umfaßt die Brücke 22, den Schalter 23 und den Datenspeicher 21. Fig. 2 zeigt außerdem noch Elemente für eine Regelung des im Flortrichter 8 zusammengefaßten Kardenbandes. Ein Meßelement, z. B. ein aktiv- oder passiv pneumatischer Flortrichter 8, erfaßt die Schwankungen des Kardenbandes; die entsprechenden Druckschwankungen werden in einem Meßwertwandler 25 in elektrische Impulse umgesetzt, der mit einem Korrekturelement 24 in Verbindung steht. Das Korrekturelement 24 ist zwischen dem Schalter 23 und dem elektronischen Motorregler 16 für die Speisewalze 1 angeordnet. Auf diese Weise wird der Sollwert für die Speisewalze 1 ständig entsprechend den Schwankungen des Kardenbandes verändert. Durch entsprechende Änderung der Drehzahl der Speisewalze 1 wird der Karde mehr oder weniger Fasermaterial zugeführt, wodurch sich eine Änderung des Bandgewichts des Kardenbandes ergibt.

**Patentansprüche**

1. Verfahren zur Produktionssteuerung und Bandregulierung für eine Karde, bei dem mindestens ein Regelkreis vorgesehen ist mit je einem Meßwertaufnehmer für die Aufnahme von Ist-Werten in jedem Augenblick während des Verarbeitungsvorganges, mit je einem Motorregler mit Sollwertsteller, in den Soll-Werte für die Drehzahlen der Kardierwalzen eingegeben werden, wobei während des Verarbeitungsvorganges die Soll-Werte mit den Ist-Werten verglichen werden und mit je einem Stellglied, dem bei einer Abweichung der Ist-Werte von den Soll-Werten die erforderlichen Sollwertsignale zugeführt werden, dadurch gekennzeichnet, daß abhängig von spezifischen Daten verschiedener Partien, jeweils bestimmte Soll-Werte für die Drehzahlen der Kardierwalzen als elektronische Signale in einen Datenspeicher eingespeichert werden und diese gespeicherten Sollwertsignale den entsprechenden Motorreglern zuführbar sind.

2. Verfahren nach Anspruch 1, dadurch gekennzeichnet, daß aus dem Datenspeicher ein elektrisches Signal (Soll-Wert) an einen Motorregler für den Abnehmer zur Einstellung der Liefergeschwindigkeiten und ein elektrisches Signal an einen Motorregler für die Speisewalze zur Einstellung des Verzuges abgegeben werden.

3. Verfahren nach Anspruch 1 oder 2, bei dem aus der Abweichung des Kardenbandes ein elektrisches Signal gewonnen wird, dadurch gekennzeichnet, daß dem elektrischen Signal, das dem Motorregler für die Speisewalze zugeführt wird, das elektrische Signal aus der Kardenbandabweichung überlagert wird.

4. Vorrichtung zur Durchführung des Verfahrens nach einem der Ansprüche 1 bis 3, bei der mindestens ein Regelkreis vorgesehen ist, bei dem einem Meßwertaufnehmer ein Motorregler mit Sollwertsteller und ein Stellglied, z. B. ein Regelmotor, nachgeordnet sind, dadurch gekennzeichnet, daß die Sollwertsteller (26, 18) über je eine Brücke (20, 22) mit dem Datenspeicher (21) verbunden sind und daß die elektronischen Motorregler (16, 12) durch eine erste Stellung zweier umstellbarer Schalter (19, 23) mit dem Sollwertsteller (26, 18) und durch eine zweite Stellung mit dem Datenspeicher (21) verbunden sind.

5. Vorrichtung nach Anspruch 4, bei der die Abweichung des Kardenbandes gemessen und elektrische Signale gebildet werden, die zur Regelung der Speisewalze herangezogen werden, dadurch gekennzeichnet, daß zwischen dem Datenspeicher (21) und dem elektronischen Motorregler (16) für die Speisewalze (1) ein Korrekturelement (24) angeordnet ist und daß die Signale aus der Kardenbandabweichung auf das Korrekturelement (24) einwirken.

6. Vorrichtung nach Anspruch 4 oder 5, dadurch gekennzeichnet, daß der Sollwertsteller (18, 26) ein Potentiometer ist.

**Claims**

1. Process for production control and sliver regulation for a carding machine, in which there is provided at least one regulating circuit each circuit having one measured value pick-up for picking up actual values in each moment during the processing operation, having one motor regulator having a desired value setter into which the desired values for the rotational speeds of the carding rollers are fed, the desired values being compared during the processing operation with the actual values, and having one adjusting element to which the neccessary desired value signals are supplied when the actual values deviate from the desired values, characterised in that, depending upon specific data of different batches, in each case certain desired values for the rotational speeds of the carding rollers are read into a data memory in the form of electronic signals and these stored desired value signals can be supplied to the corresponding motor regulators.

2. Process according to claim 1, characterised in that from the data memory an electrical signal (desired value) is emitted to a motor regulator for the doffer in order to set the delivery speeds and an electrical signal is emitted to a motor regulator for the feed roller in order to set the draft.

3. Process according to claim 1 or 2, in which an electrical signal is obtained from the deviation of the card sliver, characterised in that the electrical signal from the card sliver deviation is superimposed on the electrical signal that is supplied to the motor regulator for the feed roller.

4. Device for carrying out the process according to any one of claims 1 to 3, in which at least one regulating circuit is provided in which a motor regulator having a desired value setter, and an adjusting element, for example a regulating motor, are arranged downstream of a measured value pick-up, characterised in that the desired value setters (26, 18) are each connected via a bridge (20, 22) to the data memory (21), and that the electronic motor regulators (16, 12) are connected by a first position of two double-throw switches (19, 23) to the desired value setter (26, 18) and by a second position to the data memory (21).

5. Device according to claim 4, in which the deviation of the card sliver is measured and electrical signals are formed which are used for regulating the feed roller, characterised in that a correcting element (24) is arranged between the data memory (21) and the electronic motor regulator (16) for the feed roller (1), and that the signals from the card sliver deviation act on the correcting element (24).

6. Device according to claim 4 oder 5, characterised in that the desired value setter (18, 26) is a potentiometer.

## Revendications

1. Procédé pour commander la production et réguler le ruban d'une carde, utilisant au moins un circuit de régulation comprenant un capteur pour prélever une valeur réelle à chaque instant pendant le processus de traitement, un régulateur de moteur muni d'un dispositif de réglage de valeur de consigne, par lequel est introduite une valeur de consigne pour la vitesse de rotation d'un cylindre de la carde, la valeur réelle étant comparée pendant le processus de traitement avec la valeur de consigne, ainsi qu'une servocommande à laquelle sont appliqués les signaux de valeur de consigne nécessaires en cas d'écart de la valeur réelle par rapport à la valeur de consigne, caractérisé en ce que l'on mémorise des valeurs de consigne déterminées pour la vitesse de rotation du cylindre sous forme de signaux électroniques dans une mémoire de données en fonction de propriétés spécifiques de différents lots de matière fibreuse et, selon les besoins, on applique ces signaux de consigne mémorisés au régulateur de moteur concerné.

2. Procédé selon la revendication 1, caractérisé en ce que la mémoire fournit un signal électrique (valeur de consigne) à un régulateur de moteur pour le peigneur, en vue de réglage de la vitesse de décharge, et un signal électrique à un régulateur de moteur pour le cylindre d'alimentation, en vue du réglage de l'étirage du ruban.

3. Procédé selon la revendication 1 ou 2, dans lequel on tire un signal électrique de l'écart du ruban de carde par rapport à la valeur de consigne, caractérisé en ce que l'on superpose le signal électrique tiré de l'écart du ruban de carde au signal électrique appliqué au régulateur de moteur pour le cylindre d'alimentation.

4. Dispositif pour la mise en oeurvre du procédé selon une des revendications 1 à 3, comprenant au moins un circuit de régulation dans lequel un capteur est suivi d'un régulateur de moteur muni d'un dispositif de réglage de valeur de consigne et d'une servocommande, par exemple sous forme d'un moteur réglable, caractérisé en ce que le dispositif de réglage ou chaque dispositif de réglage de valeur de consigne (26, 18) est relié par un pont (20, 22) à la mémoire (21) et en ce que les régulateurs de moteur électroniques (16, 12) sont reliés à la mémoire (21) à une première position de deux commutateurs (19, 23) et sont reliés au dispositif de réglage de valeur de consigne (26, 18) à une deuxième position des commutateurs.

5. Dispositif selon la revendication 4, dans lequel l'écart du ruban de carde par rapport à la valeur de consigne est mesuré et utilisé pour produire des signaux électriques servant à la régulation du cylindre d'alimentation, caractérisé en ce qu'un élément correcteur (24) est disposé entre la mémoire (21) et le régulateur de moteur électronique (16) pour le cylindre d'alimentation (1) et en ce que les signaux tirés de l'écart du ruban de carde agissent sur l'élément correcteur (24).

6. Dispositif selon la revendication 4 ou 5, caractérisé en ce que le dispositif de réglage de valeur de consigne (18, 26) est un potentiomètre.

Fig. 1

| 15 | 17 | 26 | 13 | 11 |

Elektronischer Tachogenerator

Regelmotor

Sollwertsteller (Abnehmer)

Regelmotor

Elektronischer Tachogenerator

14 a

Elektronischer Motorregler (Speisewalze)

16

Sollwertvorwahl

Elektronischer Motorregler (Abnehmer)

12

Sollwertsteller (Speisewalze)

18

14 b

Sollwertvorwahl

0 028 291

# Fig. 2

0 028 291